Europäisches Patentamt

European Patent Office

Office européen des brevets

(11) Numéro de publication : **0 352 185 B1**

# (12) FASCICULE DE BREVET EUROPEEN

(45) Date de publication du fascicule du brevet :
19.08.92 Bulletin 92/34

(51) Int. Cl.$^5$ : **B62D 7/14**

(21) Numéro de dépôt : **89402048.6**

(22) Date de dépôt : **18.07.89**

(54) **Dispositif de commande de direction avant et arrière pour un véhicule automobile à quatre roues directrices.**

(30) Priorité : **19.07.88 FR 8809741**

(43) Date de publication de la demande :
**24.01.90 Bulletin 90/04**

(45) Mention de la délivrance du brevet :
**19.08.92 Bulletin 92/34**

(84) Etats contractants désignés :
**DE GB IT**

(56) Documents cités :
**FR-A- 2 578 217
FR-A- 2 608 545
PATENT ABSTRACTS OF JAPAN, vol. 12, no.
272 (M-724)[3119], 28 juillet 1988, page 35 M
724; & JP-A-63 53 179 (HONDA MOTORCO.
LTD) 07-03-1988**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Galtier, Lucien
28 rue de Favigny
F-91390 Morsang Sur Orge (FR)**
Inventeur : **Barthelemy, André
52 route de Limours
F-78470 Saint Remy-Les-Chevreuse (FR)**

(74) Mandataire : **Durand, Yves Armand Louis et al
CABINET WEINSTEIN 20, Avenue de
Friedland
F-75008 Paris (FR)**

EP 0 352 185 B1

Jouve, 18, rue Saint-Denis, 75001 PARIS

## Description

La présente invention concerne un dispositif de commande de direction avant et arrière pour un véhicule automobile à quatre roues directrices.

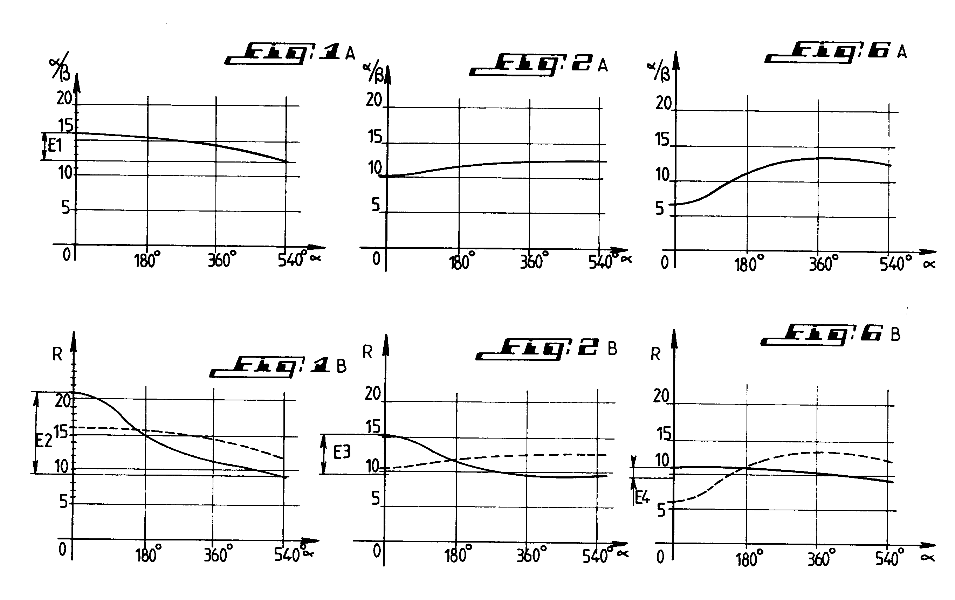

Pour les véhicules à quatre roues directrices, la loi de braquage des roues avant, donnée dans la majorité des cas par un dispositif mécanique du type comprenant un pignon solidaire d'une colonne de direction commandée par le volant et agissant suivant une loi linéaire sur une crémaillère reliée à ses extrémités à des barres de direction commandant chacune en rotation un levier autour de l'axe de pivot de support de roue, transformant ainsi le mouvement linéaire de la barre en un mouvement de rotation du pivot de roue, implique à l'essieu avant un grand écart $E1$ du rapport de démultiplication avant $\alpha/\beta$ entre la position en ligne droite des roues avant et la position de braquage maxi ce celles-ci comme représenté en figure 1A, où $\alpha$ est l'angle de manoeuvre du volant et $\beta$ l'angle de braquage des roues avant.

Par ailleurs, on sait que pour obtenir le meilleur comportement routier possible d'un véhicule à quatre roues directrices dans les conditions ci-dessus définies, il est nécessaire de braquer les roues arrière dans le même sens que les roues avant pour une valeur d'angle de braquage des roues avant inférieure à une valeur de seuil prédéterminée et dans le sens opposé aux roues avant lorsque la valeur d'angle de braquage des roues avant dépasse la valeur de seuil.

Dans ces conditions, la loi de braquage des roues arrière s'ajoutant à la loi de braquage des roues avant donnent au véhicule une loi de braquage générale unique semblable à celle représentée en figure 1B et où l'écart $E2$ du rapport $R$ de démultiplication entre la position en ligne droite du véhicule et la position de braquage maxi des roues atteint le rapport 1/2.

Cette variation du rapport de démultiplication diminue considérablement la maniabilité et la stabilité du véhicule lors de son passage sur une route en épingle à cheveux. Le conducteur doit alors s'accoutumer au comportement et à la conduite de son véhicule. De plus, les efforts du conducteur pour manoeuvrer son volant deviennent très importants notamment pendant des manoeuvres de parcage du véhicule.

Pour remédier aux inconvénients ci-dessus, diverses solutions sont possibles.

L'une consiste à laisser inchangée la loi de braquage des roues arrière en fonction du sens de braquage des roues avant comme défini ci-dessus et à intervenir sur la loi de braquage des roues avant afin de modifier la courbe de démultiplication du braquage des roues avant de la figure 1A.

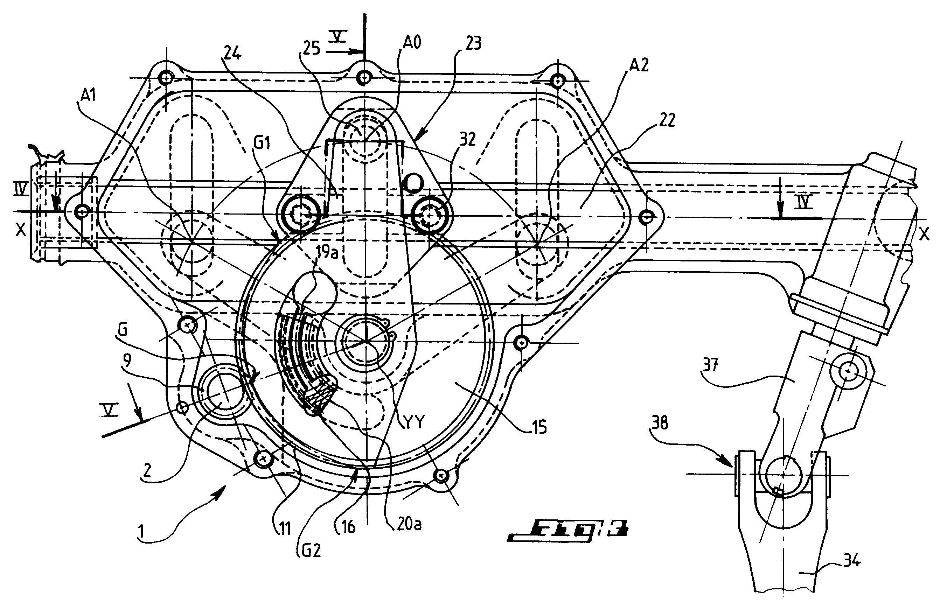

Pour cela il est possible d'utiliser une crémaillère ayant un rapport variable d'engrènement. Selon ce système connu en soi, le pignon a une denture normale tandis que la crémaillère a une denture dont le module et l'angle de pression varient d'une façon prédéterminée de part et d'autre d'une position de contact avec la denture du pignon correspondant à la position en ligne droite du véhicule. Ce système permet d'obtenir une courbe de rapport de démultiplication avant $\alpha/\beta$ telle que représentée en figure 2A. La figure 2B représente la courbe de démultiplication générale résultante, où l'écart $E3$ du rapport de démultiplication $R$ entre la position en ligne droite du véhicule et la position à la fin du braquage des roues reste encore très important.

JP-A-63-53179 décrit un dispositif de commande de direction avant et arrière pour un véhicule automobile du genre défini dans le préambule de la revendication 1. Cependant, les moyens mécaniques à démultiplication variable de ce dispositif connu ne permettent pas de corriger de façon satisfaisante la variation du rapport de démultiplication général.

La présente invention propose un dispositif de commande de direction avant et arrière pour véhicule automobile à quatre roues directrices permettant d'obtenir une courbe de démultiplication générale résultante du braquage des roues arrière et des roues avant dont l'écart du rapport de démultiplication entre la position ligne droite du véhicule et la position de fin du braquage est très réduit et semblable à celui résultant d'une courbe de rapport de démultiplication d'un véhicule à deux roues directrices avant.

Pour cela, le dispositif de l'invention du type comprenant une barre de direction avant commandée par une colonne de direction à une extrémité de laquelle est solidarisé un volant de direction et entraînant des leviers de pivotement des roues avant; un arbre de transmission monté longitudinalement au véhicule, muni de moyens pour le faire tourner autour de son axe en réponse à une action de braquage des roues avant et relié à un mécanisme de commande du braquage des roues arrière du véhicule braquant les roues arrière dans le même sens que les roues avant pour une valeur d'angle de braquage des roues avant inférieure à une valeur de seuil prédéterminée et dans le sens opposé aux roues avant lorsque la valeur d'angle de braquage des roues avant dépasse la valeur de seuil; et des moyens mécaniques à démultiplication variable interposés entre la colonne de direction et la barre de direction avant pour moduler en fonction de l'angle de manoeuvre du volant, le braquage des roues avant et des roues arrière de façon que le rapport de démultiplication avant entre la position en ligne droite des roues avant et la position de braquage maximal de celles-ci soit accru, est caractérisé en ce que lesdits moyens mécaniques sont également adaptés pour déplacer la barre de direction avant selon une loi de variation prédéterminée telle que le rapport de démultiplication général entre l'angle de manoeuvre du volant et l'angle de pivotement du véhicule résultant du braquage des roues avant et des roues arrière pour une vitesse appropriée du véhicule admette un écart pratiquement nul entre une position initiale correspondant à la postion des roues en ligne droite et une position finale correspondant au braquage maximal des roues avant dans un sens ou dans l'autre, améliorant de la sorte la maniabilité du véhicule roulant notamment sur une route en épingle à cheveux.

Selon une caractéristique additionnelle de l'invention, les moyens mécaniques comprennent un pignon à denture normale solidaire de l'autre extrémité de la colonne de direction; un secteur circulaire à denture à pas variable en engrènement avec le pignon et monté rotatif sur un arbre perpendiculaire à l'axe longitudinal de la barre de direction avant; et un mécanisme reliant le secteur à la barre de direction avant pour transformer le mouvement de rotation du secteur en un mouvement d'entraînement de la barre de direction avant suivant son axe longitudinal.

Selon une autre caractéristique additionnelle de l'invention, le mécanisme de transformation comprend un bras solidaire du secteur et dont l'extrémité libre porte un doigt muni d'au moins un galet et au moins une plaque solidaire de la barre de direction avant et comportant une lumière droite perpendiculaire à l'axe longitudinal de la barre de direction avant et dans laquelle se déplace le galet.

Selon encore une autre caractéristique additionnelle de l'invention, le bras précité occupe une position sensiblement perpendiculaire à l'axe longitudinal de la barre de direction avant à la position initiale précitée et, à cette position, le point d'engrènement du pignon avec le secteur est situé sur la bissectrice de l'angle au centre contenant le secteur.

Selon toujours une caractéristique additionnelle de l'invention, le doigt précité porte deux galets et le mécanisme de transformation comprend deux plaques superposées solidaires de la barre de direction avant, comportant respectivement deux lumières droites parallèles et perpendiculaires à la barre de direction avant et dans lesquelles se déplacent respectivement les deux galets, les deux plaques étant disposées l'une par rapport à l'autre de façon que la paroi latérale de l'une des lumières vienne en appui contre le galet correspondant et que la paroi latérale opposée de l'autre lumière vienne en appui contre l'autre galet.

Selon une caractéristique avantageuse, le dispositif de l'invention comprend de plus des moyens pour mettre en appui la denture du secteur sur le pignon et constitués de préférence par une roue dentée à denture droite normale en engrènement avec le pignon, disposée parallèlement et coaxialement au secteur, et un organe élastique disposé relativement au secteur et à la roue dentée de manière à faire tourner le secteur par rapport à la roue dentée.

De préférence, l'organe élastique est constitué par un ressort de compression monté précontraint dans deux lumières circulaires superposées respectivement du secteur et de la roue dentée et en appui d'un côté à l'extrémité de l'une des lumières et de l'autre côté à l'extrémité opposée de l'autre lumière.

Selon une autre caractéristique additionnelle de l'invention, les moyens de pivotement de l'arbre de transmission comprennent une crémaillère à denture droite normale portée sur une partie de longueur de la barre de direction avant et un pignon à denture droite normale solidaire de l'arbre de transmission et en engrènement avec la crémaillère.

Selon un autre mode de réalisation, les moyens mécaniques précités comprennent un pignon à denture à pas normal solidaire de l'autre extrémité de la colonne de direction et engrenant avec une crémaillère à denture normale; une crémaillère primaire à denture à pas variable solidaire de la crémaillère à denture normale; une crémaillère secondaire à denture à pas variable portée par la barre de direction avant et reliée à la crémaillère primaire par des pignons intermédiaires.

Suivant une caractéristique avantageuse de ce mode de réalisation, les moyens de pivotement de l'arbre de transmission comprennent une crémaillère à denture normale portée par la barre de direction avant et un pignon à denture normale solidaire de l'arbre de transmission et en engrènement avec la crémaillère.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

– les figures 1A, 1B et 2A, 2B représentent des courbes de démultiplication avant et générale d'un véhicule à quatre roues directrices muni respectivement d'une direction mécanique à crémaillère conventionnelle et d'une direction avec crémaillère à pas variable;

– la figure 3 représente le premier mode de réalisation du dispositif de commande conforme à l'invention,;

– la figure 4 est une vue en coupe suivant la ligne IV-IV de la figure 3;

– la figure 5 est une vue en coupe suivant la ligne V-V de la figure 3;

– les figures 6A et 6B représentent respectivement les courbes de démultiplication de l'essieu avant et de démultiplication générale résultante obtenues par le dispositif de l'invention; et

– la figure 7 représente un second mode de réalisation du dispositif de commande de l'invention.

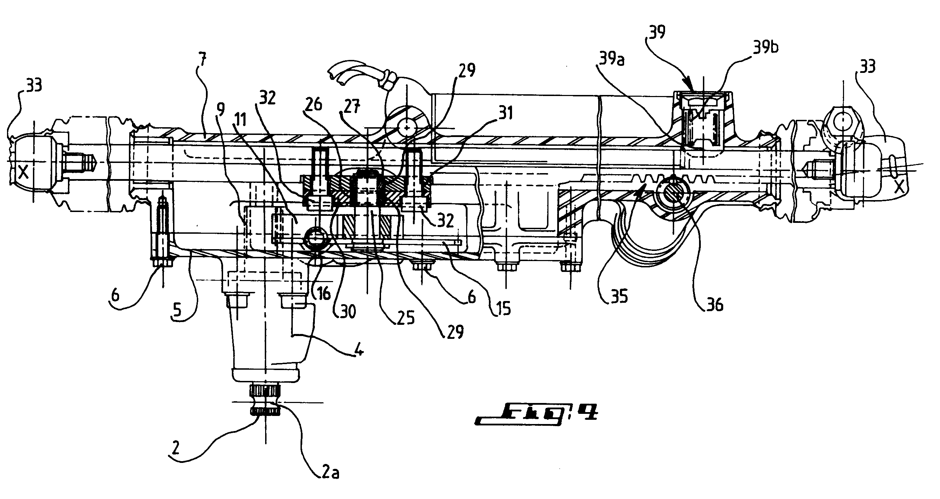

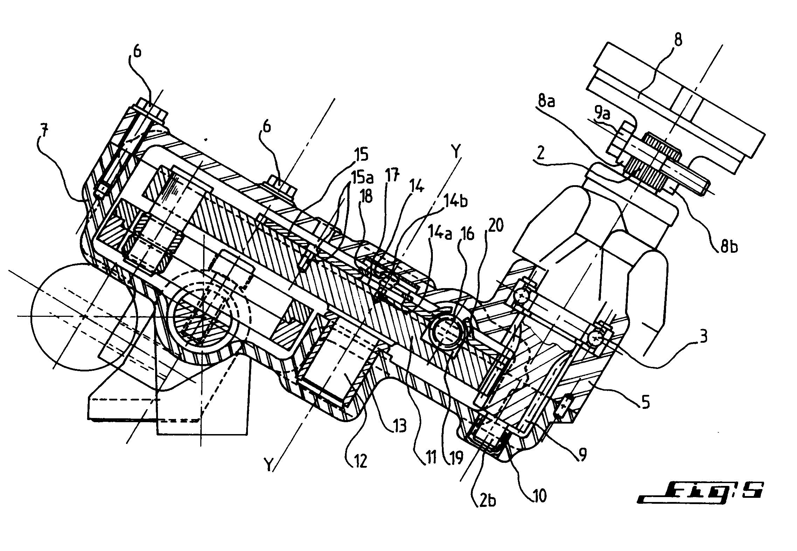

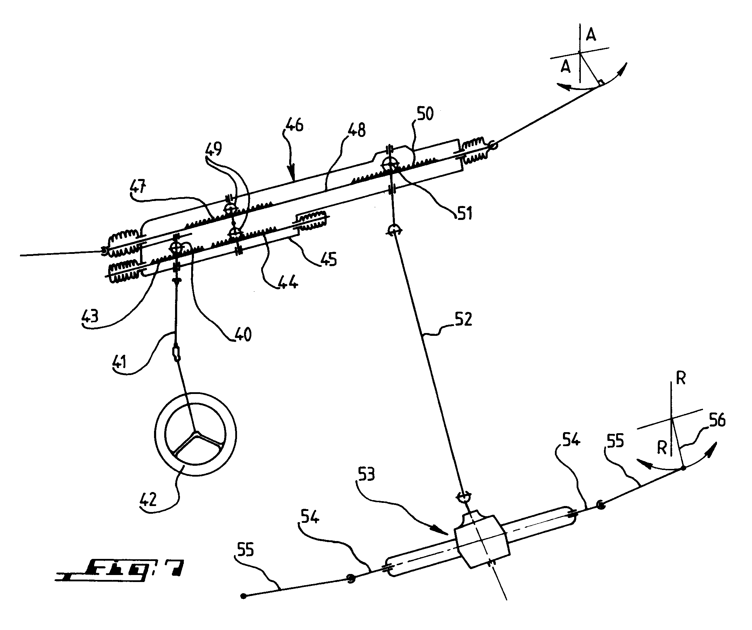

En se reportant aux figures 3 à 5, le dispositif 1 de commande de direction avant et arrière de l'invention, qui se présente dans son ensemble d'une façon identique à un dispositif de commande conventionnel et se loge en lieu et place par rapport aux roues avant (non représentées), comprend un arbre ou colonne de direction 2 monté rotatif, par l'intermédiaire d'un roulement à billes 3, dans une pièce allongée 4 venant de matière avec une partie formant couvercle 5 fixée par des vis de fixation 6 au corps 7 du boîtier contenant les différents composants du dispositif. La colonne de direction 2 a son extrémité externe rigidement reliée à un volant de direction 8 par l'intermédiaire d'une vis 9a transversale à l'axe longitudinal de la colonne 2 et s'engageant à travers deux mâchoires 8a et 8b d'extrémité du volant 8 et une gorge 2a de l'extrémité externe de la colonne 2 pour serrer les mâchoires 8a, 8b sur cette extrémité qui comporte également des dentelures rectilignes empêchant toute rotation relative entre le volant 8 et la colonne 2. L'extrémité opposée interne de la colonne 2 comporte, usiné sur une portion de sa longueur, un pignon à denture droite normale 9 et se termine par un arbre de plus faible diamètre 2b supporté en rotation par un coussinet 10 solidaire du corps 7. Le pignon 9 est ainsi centré et maintenu axialement par le roulement à billes 3 et le coussinet 10 formant paliers. De plus, le pignon 9 engrène avec un secteur circulaire denté 11 monté rotatif par un arbre 12 solidaire du secteur et supporté par un coussinet 13 formant palier solidaire du corps 7, l'axe de rotation Y-Y de l'arbre 12 étant perpendiculaire au secteur denté 11. La denture du secteur 11, par rapport à une position moyenne G, représentée en figure 3, correspondant à la position des roues en ligne droite, a un rapport d'engrènement variable, suivant une loi prédéterminée, de la position G à la position G1 pour des braquages vers la droite des roues avant, le point G1 symbolisant une extrémité de la partie dentée du secteur 11, et de G à G2 pour des braquages vers la gauche des roues avant, le point G2 symbolisant l'extrémité opposée de la partie dentée du secteur 11, les points G1 et G2 étant disposés symétriquement par rapport à un demi-axe passant par le point G et dont l'origine se trouve sur l'axe Y-Y. Autrement dit, le point G, que l'on peut également assimiler comme étant le point d'engrènement entre le pignon 9 et le secteur denté 11 à la position en ligne droite des roues du véhicule, est situé sur la bissectrice d'un angle dont le sommet se trouve sur l'axe Y-Y et les deux côtés passent respectivement par les points G1 et G2. Pour satisfaire la loi ci-dessus, les pas de la denture du secteur 11 varient graduellement de G à G1 et de G à G2. Le secteur denté 11 est maintenu axialement par la partie formant couvercle 5 par l'intermédiaire d'un pion 14 monté coaxialement à l'axe Y-Y avec son pied 14a emmanché en force dans le secteur denté 11 et sa tête extérieure bombée 14b venant en appui contre une face interne correspondante du couvercle 5 lorsque ce dernier est fixé au corps 7.

Au secteur denté 11 sont associés des moyens pour mettre en appui la denture variable du secteur 11 sur le pignon 9. Ces moyens sont de préférence constitués par une roue dentée 15 à denture droite normale en engrènement avec le pignon 9, disposée parallèlement au secteur 11 et coaxialement à l'axe Y-Y et un organe élastique 16 interposé entre le secteur 11 et la roue dentée 15 de manière à faire tourner le secteur 11 par rapport à la roue dentée 15. La roue dentée 15 est montée sur un arbre 17 solidaire du secteur denté 11 à l'opposé de l'arbre 12 et disposé coaxialement à ce dernier. Un anneau d'arrêt 18, tel qu'un circlips, est monté à l'extrémité libre de l'arbre 17 pour retenir la roue dentée 15 sur l'arbre 17 et la maintenir sensiblement en appui sur la face plane correspondante du secteur denté 11. Il est à noter que la partie conique de liaison de la tête 14b au pied 14a du pion 14 est noyée dans l'arbre 17.

L'organe élastique 16 est avantageusement constitué par un ressort de compression monté précontraint dans une chambre définie entre deux lumières circulaires superposées 19 et 20 réalisées respectivement dans le secteur 11 et la roue dentée 15 et à rayons de courbure partant de l'axe Y-Y identiques. La lumière 19 est usinée dans le secteur 11 tandis que la lumière 20 est obtenue en réalisant une partie en forme de dôme 21 sur la roue dentée 15, lequel dôme est fendu tout le long de sa partie supérieure. Le ressort 16 a l'une de ses extrémités en appui contre l'une des extrémités, par exemple 19a, de la lumière 19 et son autre extrémité opposée en appui contre l'extrémité 20a de la lumière 20 opposée à l'extrémité 19a. Le ressort 16 exerce ainsi un effort prédéterminé ayant tendance à faire tourner la roue 15 par rapport au secteur 11 pour obtenir un pincement constant de la denture du secteur 11 contre la denture du pignon 9.

La référence 15a représente un logement pour un pion retiré après montage, permettant de solidariser la roue 15 et le secteur 11 malgré la compression du ressort 16, pendant le montage.

Le secteur 11 est mécaniquement relié à la barre de direction avant 22 du véhicule par l'intermédiaire d'un mécanisme 23 transformant le déplacement circulaire du secteur 11 autour de l'axe Y-Y en un mouvement d'entraînement rectiligne de la barre de direction 22 suivant son axe longitudinal X-X orthogonal à l'axe Y-Y. Le mécanisme 23 comprend un bras 24 solidaire du secteur 11 et prolongeant ce dernier de façon que son axe longitudinal soit perpendiculaire à l'axe X-X de la barre de direction avant 22 à la position initiale correspondant à la position en ligne droite des roues du véhicule. Le bras 24 porte à son extrémité un doigt 25 perpendiculaire au bras 24 et donc parallèle à l'axe Y-Y et muni de deux galets de poussée 26 et 27 engagés respectivement dans deux lumières droites 28 et 29 perpendiculaires à l'axe longitudinal X-X de la barre de direction avant 22. Les lumières 28 et 29 sont réalisées respectivement dans deux plaques superposées 30 et 31 fixées à la barre de direction 22 par l'intermédiaire de vis de fixation 32. Avant fixation des plaques 30 et 31 à la barre de direction 22, celles-ci sont déplacées ou décalées l'une par rapport à l'autre à l'aide d'un outil approprié de façon que la paroi latérale de l'une des lumières, par exemple la lumière 28, vienne en appui contre le galet 26 et que la paroi latérale opposée de la lumière 29 vienne en appui contre le galet 27. Cette disposition a pour avantage d'éliminer tout jeu de fonctionnement par rapport à l'utilisation d'un seul galet porté par le doigt 25 et engagé dans une seule lumière correspondante. Bien entendu, les diamètres externes des galets 26 et 27 sont légèrement inférieurs respectivement aux largeurs identiques des lumières 29 et 28 tandis que leurs diamètres internes sont légèrement supérieurs aux diamètres du doigt 25.

Le bras 24 est réalisé en une seule pièce avec le secteur 11 et s'étend de ce dernier dans un même plan contenant le secteur.

La barre de direction avant 22 est reliée de façon articulée à ses deux extrémités respectivement à deux leviers de pivotement 33 des roues avant. La barre 22, en se déplaçant suivant son axe X-X, entraîne en rotation un arbre de transmission 34 représenté partiellement et monté longitudinalement au véhicule.

Sur l'arbre de transmission 34 est relié un mécanisme de commande (non représenté) du braquage des roues arrière du véhicule. Pour permettre la rotation de l'arbre 34, la barre 22 comporte une partie formant crémaillère 35 à denture droite normale en engrènement avec un pignon 36 à denture droite normale solidaire d'un arbre 37 monté rotatif , par l'intermédiaire de paliers non représentés, dans le corps 7. L'arbre 37 est mécaniquement relié à l'arbre de transmission 34 par l'intermédiaire d'une transmission au cardan 38.

La référence 39 désigne un dispositif à poussoir 39a à ressort de rappel 39b de ce dernier dans une rainure rectiligne de la barre 22 de façon à empêcher toute rotation de celle-ci et assurer son guidage axial.

Le fonctionnement du dispositif de l'invention résulte déjà en partie de la description qui en a été faite ci-dessus et va être décrit maintenant en détail.

La manoeuvre du volant de direction du véhicule, dans un sens ou dans l'autre, entraîne en rotation le pignon 9 qui entraîne le secteur denté 11 de façon à transmettre à la barre 22 un mouvement de translation rectiligne suivant l'axe X-X, laquelle barre 22 actionne, d'une part, les leviers 33 de commande du braquage des roues avant et, d'autre part, le pignon 36 entraînant par l'intermédiaire de l'arbre 37 l'arbre de transmission 34 de commande du mécanisme directionnel des roues arrière du véhicule. Le déplacement angulaire du secteur 11 amène les galets 26 et 27 à se déplacer suivant un arc de cercle de la position initiale représentée en figure 3 vers la position angulaire extrême A1 ou A2 suivant le sens de rotation appliqué au volant de direction et correspondant respectivement au braquage maximum vers la droite ou vers la gauche des roues avant. Les galets 26 et 27 agissent par poussée radiale respectivement dans les lumières 28 et 29 et se déplacent le long de celles-ci de façon à les amener aux positions respectives extrêmes représentées en traits fantômes à la figure 3. Pour une même valeur angulaire de déplacement du doigt 25 autour de l'axe Y-Y, on constate que le déplacement correspondant de la barre de direction 22 est à son maximum au voisinage de la postion initiale A0 et varie d'une façon dégressive suivant une courbe approximativement sinusoïdale de part et d'autre de A0 jusqu'à atteindre les positions angulaires extrêmes A1 ou A2.

Ainsi, à partir de la manoeuvre du volant de direction transmise au pignon 9 et aux deux dispositifs de démultiplication internes variables formés par le secteur 11 et le bras 24, on obtient un déplacement de la barre de direction avant 22 commandant le braquage des roues avant ainsi que des roues arrière satisfaisant les courbes recherchées suivant les figures 6A et 6B.

La figure 7 illustre sous forme schématique le deuxième mode de réalisation du dispositif de l'invention adapté pour commander le braquage des roues avant et des roues arrière conformément aux courbes des figures 6A et 6B.

Les moyens mécaniques permettant de moduler le braquage des roues avant en fonction de l'angle de manoeuvre du volant du véhicule comprennent un pignon 40 à denture droite normale solidaire de l'extrémité de la colonne de direction 41, opposée à celle portant le volant de direction 42, et engrenant avec une crémaillère 43 à denture droite normale qui est solidaire d'une crémaillère primaire 44 à denture droite à pas variable. Les crémaillères 43 et 44, réalisées en une seule pièce, se déplacent axialement dans une partie de carter 45 du boîtier 46 du dispositif de commande.

Les moyens mécaniques comprennent de plus une crémaillère secondaire 47 à denture droite à pas variable portée par la barre de direction avant 48 et disposée parallèlement à la crémaillère primaire 44. La crémaillère secondaire 47 est reliée à la crémaillère primaire 44 par l'intermédiaire de deux pignons intermédiaires 49.

La barre de direction avant 48 porte également une crémaillère à denture droite normale 50 engrenant avec un pignon à denture droite normale 51 solidaire d'un arbre de transmission 52 mécaniquement relié au mécanisme de commande directionnel arrière 53 mécaniquement relié à des barres de direction arrière 54 commandant par l'intermédiaire de biellettes 55 des leviers de pivotement, dont un seul 56 est représenté, des roues arrière montées sur pivots (non représentées), la figure 7 représentant l'axe R-R d'une roue arrière.

La barre de direction avant 48 et les crémaillères 47 et 50 sont réalisées en une seule pièce et montées axialement coulissantes dans le boîtier 46.

La manoeuvre du volant 42 dans un sens ou dans l'autre commande le pignon 40 qui, par l'intermédiaire de la crémaillère 43, agit sur la crémaillère primaire 44, laquelle, par son déplacement axial, fait tourner les pignons intermédiaires agissant à leur tour sur la crémaillère secondaire 47, dont les déplacements axiaux obéissent à une loi prédéterminée du type de celle représentée à la figure 6A. La crémaillère secondaire 47 commande donc, par la barre de direction avant 48, le braquage des roues avant, dont l'axe A-A de l'une d'entre elles est représenté en figure 7, et la rotation de l'arbre de transmission 52 par l'intermédiaire de la crémaillère 50 et du pignon 51 de façon que le mécanisme 53 braque les roues arrière dans le même sens que les roues avant pour une valeur d'angle de braquage du volant inférieur à une valeur de seuil et dans le sens opposé des roues avant quand la valeur d'angle de braquage du volant dépasse la valeur de seuil.

Le mécanisme de démultiplication interne de ce second mode de réalisation permet donc de commander le braquage des roues avant et des roues arrière de façon à satisfaire aux courbes des figures 6A et 6B.

Le dispositif de commande conforme à l'invention permet ainsi la conduite de véhicules à quatre roues directrices sans accoutumance du conducteur et d'obtenir surtout une meilleure maniabilité et stabilité du véhicule. Enfin, les mécanismes faisant partie de l'un ou l'autre des deux modes de réalisation ci-dessus du dispositif de l'invention sont d'une structure simple et fiable.

## Revendications

1. Dispositif de commande de direction avant et arrière pour véhicule automobile à quatre roues directrices du type comprenant une barre de direction avant (22 ; 48) commandée par une colonne de direction à une extrémité de laquelle est solidarisé un volant de direction (8) et entraînant des leviers de pivotement des roues avant ; un arbre de transmission monté longitudinalement au véhicule, muni de moyens pour le faire tourner autour de son axe en réponse à une action de braquage des roues avant et relié à un mécanisme de commande du braquage des roues arrière du véhicule braquant les roues arrière dans le même sens que les roues avant pour une valeur d'angle de braquage des roues avant inférieure à une valeur de seuil prédéterminée et dans le sens opposé aux roues avant lorsque la valeur d'angle de braquage des roues avant dépasse la valeur de seuil; et des moyens mécaniques à démultiplication variable (9, 11, 23 ; 40, 43, 44, 47, 49) interposés entre la colonne de direction (2 ; 41) et la barre de direction avant (22 ; 48) pour moduler en fonction de l'angle de manoeuvre du volant (8, 42), le braquage des roues avant et des roues arrière de façon que le rapport de démultiplication avant entre la position en ligne droite des roues avant et la position de braquage maximal de celles-ci soit accru, caractérisé en ce que lesdits moyens mécaniques (9, 11, 23; 40, 43, 44, 47, 49) sont également adaptés pour déplacer la barre de direction avant (22 ; 48) selon une loi de variation prédéterminée telle que le rapport de démultiplication général entre l'angle de manoeuvre du volant et l'angle de pivotement du véhicule résultant du braquage des roues avant et des roues arrière pour une vitesse appropriée du véhicule admette un écart (E4) pratiquement nul entre une position initiale correspondant à la position des roues en ligne droite et une position finale correspondant au braquage maximal des roues avant dans un sens ou dans l'autre, améliorant de la sorte la maniabilité du véhicule roulant notamment sur une route en épingle à cheveux.

2. Dispositif selon la revendication 1, caractérisé en ce que les moyens mécaniques précités comprennent un pignon (9) à denture normale solidaire de l'autre extrémité de la colonne de direction (2); un secteur circulaire (11) à denture à pas variable en engrènement avec le pignon (9) et monté rotatif sur un arbre perpendiculaire à l'axe longitudinal de la barre de direction avant (22); et un mécanisme (23) reliant le secteur (11) à la barre de direction avant (22) pour transformer le mouvement de rotation du secteur (11) en un mouvement d'entraînement de la barre de direction avant (22) suivant son axe longitudinal.

3. Dispositif selon la revendication 2, caractérisé en ce que le mécanisme de transformation (23) précité comprend un bras (24) solidaire du secteur (11) et dont l'extrémité libre porte un doigt (25) muni d'au moins un galet (26; 27) et au moins une plaque (30; 31) solidaire de la barre de direction avant (22) et comportant une lumière droite (28; 29) perpendiculaire à l'axe longitudinal de la barre de direction avant (22) et dans laquelle se déplace le galet (26; 27).

4. Dispositif selon la revendication 3, caractérisé en ce que le bras (24) précité occupe une position sensiblement perpendiculaire à l'axe longitudinal de la barre de direction avant (22) à la position initiale précitée et en ce qu'à cette position, le point d'engrènement (G) du pignon (9) avec le secteur (11) est situé sur la bissectrice de l'angle au centre contenant le secteur (11).

5. Dispositif selon l'une des revendications 3 et 4, caractérisé en ce que le doigt (25) précité porte deux galets (26, 27) et en ce que le mécanisme de transformation précité comprend deux plaques superposées (30, 31) solidaires de la barre de direction avant (22), comportant respectivement deux lumières droites (28, 29) parallèles et perpendiculaires à la barre de direction avant (22) et dans lesquelles se déplacent respectivement les deux galets (26, 27), les deux plaques (30, 31) étant disposées l'une par rapport à l'autre de façon que la paroi latérale de l'une (28) des lumières vienne en appui contre le galet (26) correspondant et que la paroi latérale opposée de l'autre lumière (29) vienne en appui contre l'autre galet (27).

6. Dispositif selon l'une des revendications 3 à 5, caractérisé en ce que le doigt (25) précité est perpendiculaire au bras (24) précité.

7. Dispositif selon l'une des revendications 3 à 5, caractérisé en ce que le bras (24) précité est réalisé en une seule pièce avec le secteur (11) et s'étend de ce dernier dans le même plan contenant le secteur (11).

8. Dispositif selon la revendication 3, caractérisé en ce qu'il comprend de plus des moyens (15, 16) pour mettre en appui la denture variable du secteur (11) sur le pignon (9) précité et comprenant de préférence une roue dentée (15) à denture droite normale en engrènement avec le pignon (9), disposée parallèlement et coaxialement au secteur (11), et un organe élastique (16) disposé relativement au secteur (11) et à la roue dentée (15) de manière à faire tourner le secteur (11) par rapport à la roue dentée (15).

9. Dispositif selon la revendication 8, caractérisé en ce que l'organe élastique précité est constitué par un ressort de compression (16) monté précontraint dans deux lumières circulaires superposées (19, 20) respectivement du secteur (11) et de la roue dentée (15) et en appui d'un côté à l'extrémité de l'une (19) des lumières et d'un autre côté à l'extrémité opposée de l'autre lumière (20).

10. Dispositif selon l'une des revendications précédentes, caractérisé en ce que les moyens (45, 36) de pivotement de l'arbre de transmission (34) comprennent une crémaillère à denture droite normale (35) portée sur une partie de longueur de la barre de direction avant (22) et un pignon à denture droite normale (36) solidaire de l'arbre de transmission et engrenant avec la crémaillère (35).

11. Dispositif selon la revendication 1, caractérisé en ce que les moyens mécaniques précités comprennent un pignon (40) à denture normale solidaire de l'autre extrémité de la colonne de direction (41) et engrenant avec une crémaillère à denture normale (43); une crémaillère primaire à denture à pas variable (44) solidaire de la crémaillère à denture normale (43); une crémaillère secondaire à denture à pas variable (47) portée par la barre de direction avant (48) et reliée à la crémaillère primaire (44) par l'intermédiaire de pignons (49).

12. Dispositif selon la revendication 11, caractérisé en ce que les moyens (50, 51) de pivotement de l'arbre de transmission (52) comprennent une crémaillère à denture normale (50) portée par la barre de direction avant (48) et un pignon à denture normale (51) solidaire de l'arbre de transmission (52) et engrenant avec la crémaillère (50).

## Patentansprüche

1. Vorrichtung zum Steuern der Vorder- und Hinterlenkung für ein Kraftfahrzeug mit vier Leiträdern, derjenigen Gattung mit einer durch eine Lenksäule, an derem einen Ende ein Lenkrad (8) befestigt ist, betätigten und Hebel zum Verschwenken der Vorderräder antreibenden vorderen Lenkspindelschubstange (22; 48) ; einer in Längsrichtung des Fahrzeugs angeordneten Ubertragungswelle, die mit Mitteln zum Drehen derselben um ihre Achse herum in Antwort auf eine Einwirkung zum Lenkungseinschlag der Vorderräder versehen und mit einem Mechanismus zur Steuerung des Lenkungseinschlags der Hinterräder des Fahrzeugs verbunden ist, welcher die Hinterräder in derselben Richtung wie die Vorderräder für einen Einschlagswinkelwert der Vorderräder kleiner als ein vorbestimmter Schwellenwert und in der entgegengesetzten Richtung der Vorderräder, wenn der Einschlagswinkelwert der Vorderräder den Schwellenwert überschreitet, Einschlägt ; und zwischen der Lenksäule (2 ; 41) und der vorderen Lenkspindelschubstange (22 ; 48) zwischengeschalteten mechanischen Mitteln mit veränderlicher Untersetzung (9, 11, 23; 40; 43, 44, 47, 49), um den Einschlag der Vorderräder und der Hinterräder derart in Abhängigkeit des Betätigungswinkels des Lenkrades (8 ;42) zu modulieren, dass das vordere Untersetzungsverhältnis zwischen der Stellung auf gerader strecke der Vorderräder und der Stellung beim vollständigen Einschlag derselben erhöht wird, dadurch gekennzeichnet, dass die besagten mechanischen Mittel (9, 11, 23 ; 40, 43, 44, 47, 49) ebenfalls zur Verschiebung der vorderen Lenkspindelschubstange (22 ; 48) gemäss einem derartigen vorbestimmten Veränderungsgesetz angepasst sind, dass das allgemeine Untersetzungsverhältnis zwischen dem Betätigungswinkel des Lenkrades und dem sich aus dem Einschlag der Vorderräder und der Hinterräder bei einer geeigneten Geschwindigkeit des Fahrzeugs ergebenden Schwenkwinkel des Fahrzeugs eine Abweichung (E4) praktisch gleich nul zwischen einer der Stellung der Räder auf gerader Strecke entsprechenden ursprünglichen Stellung und einer dem vollständigen Einschlag der Vorderräder in einer oder der anderen Richtung entsprechenden Endstellung zulässt, wodurch die Wendigkeit des auf einer Landstrasse mit haarnadelförmigen Biegungen fahrenden Fahrzeugs verbessert wird.

2. Vorrichtung nach Anpruch 1, dadurch gekennzeichnet, dass die vorgenannten mechanischen Mittel ein mit den anderen Ende der Lenksäule (2) fest verbundenes Ritzel (9) mit normaler Verzahnung ; einen mit dem Ritzel (9) kämmenden und an einer senkrecht zur Längsachse der vorderen Lenkspindelschubstange (22) verlaufenden Welle drehbar angeordneten kreisförmigen Sektor mit Verzahnung mit veränderlicher Zahnteilung ; und einen den Sektor (11) mit der vorderen Lenkspindelschubstange (22) verbindenden Mechanismus (23), um die Drehbewegung des Sektors (11) in eine Bewegung zum Antrieb der Lenkspindelschubstange (22) entlang ihre Längsachse umzuwandeln, umfassen.

3. Vorrichtung nach Anspruch 2, dadurch gekennzeichnet, dass der vorgenannte Umwandlungsmechanismus (23) einen mit dem Sektor (11) fest verbundenen Arm (24) aufweist, dessen freies Ende einen mit wenigstens einer Rolle (26 ; 27) versehenen Finger (25) trägt und wenigstens eine mit der vorderen Lenkspindelschubstange (22) fest verbundene und ein senkrecht zur Längsachse der vorderen Lenkspindelschubstange (22) versehenes geradliniges Langloch (28 ; 29) aufweisende Platte (30 ; 31) in welchem sich die Rolle (26 ; 27) bewegt, aufweist.

4. Vorrichtung nach Anspruch 3, dadurch gekennzeichnet, dass der vorgenannte Arm (24) in der vorgenannten ursprünglichen Stellung eine etwa senkrecht zur Längsachse der vorderen Lenkspindelschubstange (22) verlaufende Stellung einnimmt und dass in dieser Stellung der Punkt (G) des Eingriffs des Ritzels (9) mit dem Sektor (11) auf der Halbierenden des den Sektor (11) enthaltenden Mittelpunktwinkels liegt.

5. Vorrichtung nach einem der Ansprüche 3 und 4, dadurch gekennzeichnet, dass der vorgenannte Finger (25) zwei Rollen (26, 27) trägt und dass der vorgenannte Umwandlungsmechanismus zwei mit der vorderen Lenkspindelschubstange (22) fest verbundene und jeweils zwei gerade, parallele und senkrecht zur vorderen Lenkspindelschubstange (22) verlaufende Langlöcher (28, 29) in welchen sich jeweils die beiden Rollen (26, 27) bewegen, aufweisende übereinander angeordnete Platten (30, 31) umfasst, wobei die beiden Platten (30, 31) derart in Bezug zueinander angeordnet sind, dass die Seitenwandung des einen Langloches (28) zur Abstützung an der entsprechenden Rolle (26) kommt und dass die entgegengesetzte Seitenwandung des anderen Langloches (29) zur Abstützung an der anderen Rolle (27) kommt.

6. Vorrichtung nach einem der Ansprüche 3 bis 5, dadurch gekennzeichnet, dass der vorgenannte Finger (25) senkrecht zum vorgenannten Arm (24) verläuft.

7. Vorrichtung nach einem der Ansprüche 3 bis 5, dadurch gekennzeichnet, dass der vorgenannte Arm (24) einstückig mit dem Sektor (11) hergestellt ist und sich von diesem letzteren ab in der den Sektor (11) enthaltenen selben Ebene erstreckt.

8. Vorrichtung nach Anspruch 3, dadurch gekennnzeichnet, dass sie zusätzlich Mittel (15, 16) zur Abstützung der veränderlichen Verzahnung des Sektors (11) an dem vorgenannten Ritzel (9) aufweist, wobei diese Mittel vorzugsweise ein mit dem Ritzel (9) kämmendes, parallel und koaxial zum Sektor (11) angeordnetes Zahnrad (15) mit Geradverzahnung und ein in Bezug zum Sektor (11) und zum Zahnrad (15) zum Zweck der Verdrehung des Sektors (11) gegenüber dem Zahnrad (15) angeordnetes elastisches Glied (16) umfasst.

9. Vorrichtung nach Anspruch 8, dadurch gekennzeichnet, dass das vorgenannte elastische Glied durch eine in zwei übereinander liegenden kreisförmigen Langlöchern (19, 20) jeweils des Sektors (11) und des Zahnrades (15) mit Vorspannung angeordnete und sich einerseits an dem Ende des einen Langloches (19) und andererseits an dem entgegengesetzten Ende des anderen Langloches (20) abstützende Druckfeder (16) gebildet wird.

10. Vorrichtung nach einem der vorangehenden Ansprüche, dadurch gekennzeichnet, dass die Mittel (45, 36) zur Verschwenkung der Ubertragungswelle (34) eine von einem Teil der Länge der vorderen Lenkspindelschubstange (22) getragene Zahnstange mit normaler Geradeverzahnung und ein mit der Ubertragungswelle fest verbundenes und mit der Zahnstange (35) kämmendes Ritzel mit normaler Geradverzahnung (36) umfassen.

11. Vorrichtung nach Anspruch 1, dadurch gekennzeichnet, dass die vorgenannten mechanischen Mittel ein mit dem anderen Ende der Lenksäule (41) fest verbundenes und mit einer Zahnstange mit normaler Verzahnung (43) kämmendes Ritzel (40) mit normaler Verzahnung ; eine mit der Zahnstange mit normaler Verzahnung (43) fest verbundene Primärzahnstange (44) mit Verzahnung mit veränderlicher Zahnteilung;eine von der vorderen Lenkspindelschubstange (48) getragene und mit der Primärzahnstange (44) über Ritzel (49) verbundene Sekundärzahnstange mit Verzahnung mit veränderlicher Zahnteilung (47) aufweisen.

12. Vorrichtung nach Anspruch 11, dadurch gekennzeichnet, dass die Mittel (50, 51) zur Verschwenkung der Ubertragungswelle (52) eine von der vorderen Lenkspindelschubstange (48) getragene Zahnstange mit normaler Verzahnung (50) und ein mit der Ubertragungswelle (52) fest verbundenes und mit der Zahnstange (50) kämmendes Ritzel mit normaler Verzahnung (51) aufweisen.

**Claims**

1. Front and rear steering control device for an automotive vehicle with four steerable wheels of the type comprising a front steering drag-link (22 ; 48) operated by a steering column to one end of which is made fast a steering wheel (8) and driving levers for pivoting the front wheels ; a transmission shaft mounted longitudinally of the vehicle, provided with means for rotating it about its axis in response to an action of locking over the front wheels and connected to a mechanism for controlling the locking over of the back wheels of the vehicle locking over the back wheels in the same direction as the front wheels for a value of the angle of steering lock of the front wheels lower than a predetermined threshold value and in the direction opposite to the front wheels when the value of the angle of steering lock of the front wheels exceeds the threshold ; and mechanical means with a variable gearing-down (9, 11 , 23 ; 40, 43, 44, 47, 49) interposed between the steering column (2 ; 41) and the front steering drag-link (22 ; 48) to modulate as a function of the angle of operation of the steering wheel (8, 42) the lock of the front wheels and of the rear wheels so that the front gearing-down ratio between the position in a straight line of the front wheels and the position of full lock of the latter be increased, characterized in that the said mechanical means (9, 11, 23 ; 40, 43, 44, 47, 49) are also adapted to displace the front steering drag-link (22; 48) according to a law of predetermined variation such that the general gearing-down ratio between the angle of operation of the steering wheel and the angle of pivoting of the vehicle resulting from the lock of the front wheels and of the rear wheels for a suitable speed of the vehicle admits a practically zero deviation (E4) between an initial position corresponding to the position of the wheels in a straight line and a final position corresponding to the full lock of the front wheels in one direction or in the other one, thus improving the handiness of the vehicle rolling in particular on a road with hair-pin bends.

2. Device according to claim 1, characterized in that the aforesaid mechanical means comprise a pinion (9) with normal teeth made fast to the other end of the steering column (2) ; a circular sector (11) with variable-pitch teeth in meshing relationship with the pinion (9) and rotatably mounted on a shaft perpendicular to the longitudinal axis of the front steering drag-link (22) ; and a mechanism (23) connecting the sector (11) to the front steering draglink (22) to transform the rotary motion of the sector (11) into a motion for driving the front steering draglink (22) along its longitudinal axis.

3. Device according to claim 2, characterized in that the aforesaid conversion mechanism (23) comprises an arm (24) made fast to the sector (11) and the free end of which carries a finger (25) provided with at least one roller (26 ; 27) and at least one plate (30 ; 31) made fast to the front steering drag-link (22) and comprising a straight elongated opening (28 ; 29) perpendicular to the longitudinal axis of the front steering drag-link (22) and in which the roller (26 ; 27) is moving.

4. Device according to claim 3, characterized in that the aforesaid arm (24) assumes a position substantially perpendicular to the longitudinal axis of the front steering drag-link (22) in the aforesaid initial position and in that in this position the point of meshing (G) of the pinion (9) with the sector (11) is located on the bisecting line of the angle at the centre containing the sector (11).

5. Device according to one of claims 3 and 4, characterized in that the aforesaid finger (25) carries two rollers (26, 27) and in that the aforesaid conversion mechanism comprises two superimposed plates (30, 31) made fast to the front steering drag-link (22), comprising two parallel straight elongated openings (28, 29) perpendicular to the front steering drag-link (22), respectively, and in which are moving both rollers (26, 27), respectively, both plates (30, 31) being disposed with respect to each other so that the side wall of one (28) of the elongated openings is caused to bear against the corresponding roller (26) and that the opposite side wall of the other elongated opening (29) is caused to bear against the other roller (27).

6. Device according to one of claims 3 to 5, characterized in that the aforesaid finger (25) is perpendicular to the aforesaid arm (24).

7. Device according to one of claims 3 to 5, characterized in that the aforesaid arm (24) is made in one single piece with the sector (11) and extends from the latter in the same plane containing the sector (11).

8. Device according to claim 3, characterized in that it in addition comprises means (15, 16) for putting the variable teeth of the sector (11) in bearing engagement with the aforesaid pinion (9) and preferably comprising a toothed wheel (15) with normal spur teeth in meshing engagement with the pinion (9), disposed parallel to and coaxially with the sector (11) and an elastic member (16) disposed in relation to the sector (11) and to the toothed wheel (15) so as to rotate the sector (11) with respect to the toothed wheel (15).

9. Device according to claim 8, characterized in that the aforesaid elastic member is constituted by a compression spring (16) mounted in a prestressed condition in two superimposed circular elongated openings (19, 20) of the sector (11) and of the toothed wheel (15), respectively, and in bearing engagement on one side at the end of one (19) of the elongated openings and on the other side at the opposite end of the other elongated opening (20).

10. Device according to one of the foregoing claims, characterized in that the means (45, 36) for pivoting the transmission shaft (34) comprise a rack with normal spur teeth (35) carried on one portion of length of the front steering drag-link (22) and a pinion with normal spur teeth (36) made fast to the transmission shaft and meshing with the rack (35).

11. Device according to claim 1, characterized in that the aforesaid mechanical means comprise a pinion (40) with normal teeth made fast to the other end of the steering column (41) and meshing with a rack with normal teeth (43); a primary rack with variable-pitch teeth (44) made fast to the rack with normal teeth (43); a secondary rack with variable-pitch teeth (47) carried by the front steering drag-link (48) and connected to the primary rack (44) through the medium of gears (49).

12. Device according to claim 11, characterized in that the means (50, 51) for pivoting the transmission shaft (52) comprise a rack with normal teeth (50) carried by the front steering drag-link (48) and a pinion with normal teeth (51) made fast to the transmission shaft (52) and meshing with the rack (50).

Fig. 6 A

Fig. 6 B

Fig. 2 A

Fig. 2 B

Fig. 1 A

Fig. 1 B

Fig.3

Fig. 4

EP 0 352 185 B1

Fig.5

14

FIG.7